# EUROPÄISCHE PATENTSCHRIFT

(11) **EP 2 875 501 B1**
(45) Veröffentlichungstag und Bekanntmachung des Hinweises auf die Patenterteilung: **13.04.2016**
(21) Anmeldenummer: 13723671.7
(22) Anmeldetag: 16.05.2013
(51) Int. Cl.: G08G 1/16, G08G 1/0967, G08G 1/0962, G08G 1/0965, B60W 50/14

(54) **VERFAHREN ZUM BETREIBEN EINES KRAFTFAHRZEUGS, BEI WELCHEM VERFAHREN EIN NUTZER AUF DER BASIS VON FAHRZEUGEXTERNEN UND FAHRZEUGINTERNEN DATEN VOR GEFAHRENSITUATIONEN GEWARNT WIRD UND ENTSPRECHEND BETRIEBENES KRAFTFAHRZEUG**
METHOD OF OPERATING AN AUTOMOBILE VEHICLE IN WHICH METHOD A USER BE WARNED ABOUT DANGEROUS SITUATIONS ON THE BASIS OF VEHICLE EXTERNAL AND INTERNAL DATA, AND CORRESPONDINGLY OPERATED AUTOMOBILE VEHICLE
PROCÉDÉ POUR OPÉRER UN VÉHICULE AUTOMOBILE DANS QUEL PROCÉDÉ UN UTILISATEUR EST ALERTÉ DE SITUATIONS DANGÉREUSES SUR LA BASE DES DONNÉES VÉHICULAIRES EXTERNES ET INTERNES, ET VÉHICULE AUTOMOBILE OPÉRÉ CONFORMÉMENT

(30) Priorität: 21.07.2012 DE 102012014457
(43) Veröffentlichungstag der Anmeldung: 27.05.2015
(73) Patentinhaber: Audi AG, 85045 Ingolstadt (DE)
(72) Erfinder: HAINZLMAIER, Andre, 85290 Geisenfeld (DE); HABERL, Roland, 85051 Ingolstadt (DE); LAMPRECHT, Andreas, 86633 Neuburg (DE); NETTER, Florian, 85049 Ingolstadt (DE); OLDEWURTEL, Frank, 85049 Ingolstadt (DE); SPRICKMANN KERKERINCK, Paul, 85051 Ingolstadt (DE)
(74) Vertreter: Brandt, Kai
(86) Internationale Anmeldenummer: PCT/EP2013/001449
(87) Internationale Veröffentlichungsnummer: WO 2014/015922

(56) Entgegenhaltungen:
- EP-A2- 0 897 168
- EP-A2- 0 959 442
- EP-A2- 1 150 266
- WO-A2-2007/038451
- DE-A1- 3 941 402
- DE-A1- 10 329 523
- DE-A1- 19 604 084
- DE-A1-102006 057 741

## Beschreibung

Die Erfindung betrifft ein Verfahren zum Betreiben eines Kraftfahrzeugs, bei welchem einer Empfangseinrichtung des Kraftfahrzeugs fahrzeugexterne Daten übermittelt werden, welche auf das Vorliegen einer Gefahrensituation schließen lassen. Einem Nutzer des Kraftfahrzeugs wird eine die Gefahrensituation betreffende Warnung kommuniziert. Des Weiteren betrifft die Erfindung ein Kraftfahrzeug.

Aus dem Stand der Technik ist die sogenannte Car-to-Car-Kommunikation bekannt, bei welcher ein Austausch von Informationen und Daten zwischen Kraftfahrzeugen stattfindet. Dies geschieht etwa, um einem Fahrer frühzeitig auf eine Gefahrensituation hinweisen zu können. Beispielsweise kann ein Kraftfahrzeug, welches an einem Stauende zum Stehen kommt, eine entsprechende Informationen an weitere Kraftfahrzeuge übermitteln, so dass Fahrer dieser Kraftfahrzeuge ebenfalls rechtzeitig die Geschwindigkeit verringern können, bevor das Stauende überhaupt einsehbar ist.

Als nachteilig ist hierbei der Umstand anzusehen, dass für einen Nutzer des Kraftfahrzeugs dennoch nicht alle Gefahrenquellen im Straßenverkehr unmittelbar ersichtlich sind. Des Weiteren kann es zu einer Fehleinschätzung der aktuell vorliegenden Gefahrensituation oder auch zu einer Überschätzung der eigenen Fähigkeiten im Straßenverkehr kommen.

Dokument DE 103 29 523 A1, welches die Merkmale der Oberbegriffe der unabhängigen Ansprüche 1 und 9 offenbart, beschreibt ein Verfahren zum Betreiben eines Fahrzeugs mit einer Vielzahl von Fahrerassistenzsystemen, welche Warnsysteme und Sicherheitssysteme umfassen. Hierbei werden mittels GPS Gefahrenstellen im Voraus erkannt. Zusätzlich zu solchen fahrzeugexternen Daten werden Betätigungen von Bedienpedalen des Fahrzeugs wie etwa eines Gaspedals, eines Bremspedals oder eines Kupplungspedals ausgewertet und zur Ermittlung des Fahrverhaltens des Fahrers herangezogen. Eine Gefahrstellenwarneinrichtung übermittelt dem Fahrer eine Warnung. Hierbei kann eine Warnschwelle eines Kurvenwarnsystems in Abhängigkeit vom Kurvenfahrverhalten des Fahrers erleichtert oder erschwert werden, je nachdem, ob ein zögerlicher Fahrer oder ein sportlicher Fahrer fährt.

Aufgabe der vorliegenden Erfindung ist es daher, ein Verfahren der eingangs genannten Art sowie ein zur Durchführung dieses Verfahrens geeignetes Kraftfahrzeug zu schaffen, welches eine verbesserte Warnung vor Gefahrensituationen ermöglicht.

Diese Aufgabe wird durch ein Verfahren mit den Merkmalen des Patentanspruchs 1 und durch ein Kraftfahrzeug mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Beim erfindungsgemäßen Verfahren werden zusätzlich zu den fahrzeugexternen Daten fahrzeuginterne Daten ausgewertet, welche auf das Vorliegen einer Gefahrensituation schließen lassen. Die Warnung wird hierbei dem Nutzer des Kraftfahrzeugs in Abhängigkeit von der Auswertung der fahrzeugexternen und der fahrzeuginternen Daten kommuniziert. Durch das Berücksichtigen der fahrzeuginternen Daten zusätzlich zu den fahrzeugexternen Daten wird der Nutzer des Kraftfahrzeugs besonders gezielt und individuell auf die Gefahrensituation hingewiesen. Der Nutzer wird also in Echtzeit vor der für ihn besonders relevanten Gefahrensituation gewarnt. Für den Fahrer herrscht dann Transparenz über die Echtzeit-Gefahrenlage während des Fahrens, so dass eine verbesserte Warnung vor Gefahrensituationen erreicht ist.

Dem liegt die Erkenntnis zugrunde, dass die gleichen äußeren Umstände, welche zur Einstufung einer Situation als Gefahrensituation führen können, aufgrund der Fahrsituation des Kraftfahrzeugs, dessen Empfangseinrichtung die fahrzeugexternen Daten empfängt, mehr oder weniger relevant sein können. Durch die Verknüpfung fahrzeuginterner Daten mit den fahrzeugexternen Daten beim Ermitteln des Vorliegens der Gefahrensituation kann also eine besonders gut an die Gefahrensituation angepasste Warnung des Nutzers des Kraftfahrzeugs erfolgen. Durch das individuelle Warnen des Fahrers vor den für ihn besonders relevanten Gefahrensituationen in Echtzeit auf der Basis verknüpfter Daten ist ein Schritt zum smarten Kraftfahrzeug realisiert. Es lassen sich so Unfälle vermeiden, was sowohl individuellen als auch gesamtgesellschaftlichen Nutzen generiert.

Bevorzugt werden als fahrzeugexterne Daten weitere Kraftfahrzeuge betreffende Daten ausgewertet und beim Ermitteln des Vorliegens der Gefahrensituation berücksichtigt. Hierbei können Echtzeitdaten berücksichtigt werden, also Daten, die in einem Zeitpunkt von lediglich einem weiteren Kraftfahrzeug dem die fahrzeugexternen Daten empfangenden Kraftfahrzeug übermittelt werden. Besonders verlässlich lässt sich jedoch auf das Vorliegen der Gefahrensituation schließen, wenn fahrzeugexterne Daten ausgewertet werden, welche eine Vielzahl von weiteren Kraftfahrzeugen betreffen. Hierbei können beispielsweise über ein bestimmtes Zeitintervall die fahrzeugexternen Daten gesammelt und statistisch ausgewertet werden. Wenn nämlich eine Vielzahl von weiteren Kraftfahrzeugen ähnliche, Rückschlüsse auf die Gefahrensituation zulassende Daten übermitteln, so ist der tatsächlich gezogene Rückschluss besonders aussagekräftig. Die Auswertung kann insbesondere auf Seiten des die fahrzeugexternen Daten empfangenden Kraftfahrzeugs erfolgen. Es können jedoch zusätzlich oder alternativ dem die fahrzeugexternen Daten empfangenden Kraftfahrzeug die Daten bereits statistisch ausgewertet übermittelt werden.

Die Daten, welche weitere Kraftfahrzeuge betreffen, können insbesondere eine Fahrgeschwindigkeit umfassen. Insbesondere wenn sich nämlich beispielsweise die Fahrgeschwindigkeit weiterer Kraftfahrzeuge von vergleichsweise hohen Werten plötzlich auf vergleichsweise geringe Werte verringert, kann dies nämlich als Indiz für das Vorliegen einer Gefahrensituation gewertet werden.

Zusätzlich oder alternativ können die weiteren Kraftfahrzeuge Reibwerte eines Fahrbahnbelags übermitteln. Wenn nämlich schwache Reibwerte vorliegen, so ist dies ein Hinweis auf Nässe und/oder Glätte im Bereich der weiteren Kraftfahrzeuge, welche dann auch für das die Empfangseinrichtung aufweisende Kraftfahrzeug kritisch werden kann.

Auch das Eingreifen eines Sicherheitssystems in die Fahrt der weiteren Kraftfahrzeuge, etwa das Aktivieren eines elektronischen Stabilitätsprogramms oder eines Antiblockiersystems, kann Hinweise auf das Vorliegen einer Gefahrensituation in einem bevorstehenden Streckenabschnitt liefern.

Des Weiteren kann das Betätigen eines Scheibenwischers und/oder ein Signal eines Regensensors darüber Aufschluss geben, dass Niederschlag und/oder Nässe vorhanden ist, welcher bzw. welche die Fahrsicherheit beeinträchtigen kann.

Ähnliche Schlüsse lassen sich aus dem Aktivieren eines Leuchtmittels zumindest eines der weiteren Kraftfahrzeuge ziehen, etwa wenn ein Nebelscheinwerfer oder eine Nebelschlussleuchte eingeschaltet wird. Hierbei kann insbesondere vorgesehen sein, dass erst dann auf das Vorliegen von Niederschlag oder Nässe geschlossen wird, wenn zusätzlich zum Aktivieren des Leuchtmittels wenigstens ein Sensor, etwa ein Feuchtesensor und/oder ein Temperatursensor, des Kraftfahrzeugs einen der nebligen Witterung entsprechenden Messwert liefert. Dem liegt die Erkenntnis zugrunde, dass das Einschalten etwa einer Nebelschlussleuchte durch einen Fahrzeugnutzer nicht zwangsläufig mit dem tatsächlichen Vorliegen von Nebel einhergeht.

Weitere fahrzeugexterne Daten, welche andere Kraftfahrzeuge betreffen, können eine Stellung einer Sonneblende und/oder ein Signal einer Einrichtung zum Erfassen des Sonnenstands umfassen. Insbesondere bei tiefstehender Sonne kann nämlich aufgrund der damit einhergehenden Blendung von den Fahrern der weiteren Kraftfahrzeuge auf das Vorliegen einer Gefahrensituation geschlossen werden.

Als fahrzeugexterne Daten können auch die Anwesenheit eines Rettungsfahrzeugs und/oder Einsatzfahrzeugs beim Ermitteln des Vorliegens der Gefahrensituation berücksichtigt werden. Die Anwesenheit von Rettungsfahrzeugen lässt nämlich ebenfalls den Schluss zu, dass eine Gefahrensituation bevorsteht. Hierbei können die Rettungsfahrzeuge oder Einsatzfahrzeug selber der Empfangseinrichtung übermitteln, dass sie anwesend sind, oder es können die weiteren Kraftfahrzeuge auf die Anwesenheit von Rettungsfahrzeugen oder Einsatzfahrzeugen hinweisen.

Alternativ, bevorzugt jedoch zusätzlich werden als fahrzeugexterne Daten Internetdaten ausgewertet und beim Ermitteln des Vorliegens der Gefahrensituation berücksichtigt. Beispielsweise können online verfügbare Daten, welche eine Unfallhäufigkeit auf einer Fahrstrecke angeben, einen Hinweis darauf geben, dass auf dieser Fahrstrecke von einer besonderen Gefahrensituation ausgegangen werden kann. Auch online verfügbare Wetterdaten können ausgewertet werden und auf das Vorliegen einer Gefahrensituation schließen lassen, etwa wenn plötzlich Niederschlag einsetzt oder bevorsteht.

An Internetdaten können auch den Verkehrsfluss angebende Daten berücksichtigt werden, um auf das Vorliegen einer Gefahrensituation schließen zu können. Wenn beispielsweise auf bestimmten Fahrstrecken häufig mit Staus zu rechnen ist, so können derartige Angaben online zur Verfügung gestellt und als Internetdaten ausgewertet und berücksichtigt werden.

Auch Unfallmeldungen können online zur Verfügung gestellt und ausgewertet werden, ebenso wie das Vorhandensein von Baustellen. Beispielsweise können in einer Baustellendatenbank Daten online zur Verfügung gestellt werden, welche dann beim Ermitteln des Vorliegens der Gefahrensituation berücksichtigt werden.

Insbesondere Wetterdaten, den Verkehrsfluss angebende Daten, Unfallmeldungen oder das Vorhandensein von Baustellen können auch über ein Radiodatensystem übermittelt werden, um diese fahrzeugexternen Daten beim Ermitteln des Vorliegens der Gefahrensituation zu berücksichtigen. Es können auch sowohl die Internetdaten als auch die über das Radiodatensystem zur Verfügung gestellten Informationen berücksichtigt werden, um bei einem Ausfall oder einer Beeinträchtigung auf das jeweils andere System ausweichen zu können.

Die fahrzeuginternen Daten, welche ausgewertet und beim Ermitteln des Vorliegens der Gefahrensituation berücksichtigt werden, können insbesondere eine Fahrgeschwindigkeit des Kraftfahrzeugs umfassen. Bei hoher Fahrgeschwindigkeit ist nämlich beispielsweise das Auffahren auf ein Stauende riskanter als bei niedriger Fahrgeschwindigkeit. In ähnlicher Weise kann ein Abstand des Kraftfahrzeugs zu weiteren Verkehrsteilnehmern berücksichtigt werden, um das Vorliegen der Gefahrensituation festzustellen. Hierbei ist insbesondere der Abstand zu sich vor dem Kraftfahrzeug befindenden weiteren Kraftfahrzeugen relevant.

Auch das Lenkverhalten eines Fahrers des Kraftfahrzeugs kann Rückschlüsse auf das Vorliegen einer Gefahrensituation zulassen. Wenn nämlich der Fahrer häufig Korrekturbewegungen an einer Lenkhandhabe vornimmt oder häufig Fahrspurwechsel oder Überholmanöver durchführt, so kann dies ebenfalls einen Hinweis darauf geben, dass beispielsweise das Auffahren auf ein Stauende für diesen Fahrer mit einer erhöhten Gefahr verbunden ist. Dies gilt im Vergleich zu einem Fahrer, welcher kaum Lenkbewegungen oder Korrekturbewegungen vornimmt.

Auch eine Kurvengeschwindigkeit des Kraftfahrzeugs und/oder eine Längsbeschleunigung und/oder eine Querbeschleunigung desselben können dieselbe fahrzeugexterne Situation individuell unterschiedlich gefährlich werden lassen. Bei einer sich durch hohe Kurvengeschwindigkeiten und hohe Längsund Querbeschleunigungen auszeichnenden sportlichen Fahrweise des Fahrers des Kraftfahrzeugs ist nämlich beispielsweise das Erreichen eines Stauendes riskanter als bei defensiver Fahrweise des Fahrers.

Des Weiteren können als fahrzeuginterne Daten ein Reibwert eines Fahrbahnbelags und/oder ein Zustand von Reifen des Kraftfahrzeugs und/oder ein Zustand einer Bremsanlage des Kraftfahrzeugs berücksichtigt werden, um dem Nutzer des Kraftfahrzeugs eine an die Gefahrensituation angepasste Warnung zu kommunizieren. Auch diese fahrzeuginternen Daten haben nämlich bei gleichen äußeren Bedingungen einen unterschiedlichen Einfluss auf die individuelle, also für den Fahrer des Kraftfahrzeugs gegebene Relevanz der Gefahrensituation.

In einer weiteren vorteilhaften Ausgestaltung der Erfindung werden an fahrzeuginternen Daten solche ausgewertet, welche einen Fahrer des Kraftfahrzeugs betreffen. Diese den Fahrer des Kraftfahrzeugs betreffenden Daten werden dann beim Ermitteln des Vorliegens der Gefahrensituation berücksichtigt. Hierbei sind insbesondere des Fahrers eine Reaktionszeit und/oder ein Müdigkeitszustand und/oder sein allgemeines Aufmerksamkeitsniveau von Relevanz. Insbesondere letztere Informationen können beispielsweise über eine Blickerfassung (Eye Tracking) ermittelt werden.

Die genannten den Fahrer betreffenden Daten lassen nämlich ebenso Schlüsse darauf zu, wie sich die tatsächliche Gefahrenlage für den individuellen Fahrer darstellt. So kann beispielsweise ein ausgeruhter und reaktionsschneller Fahrer leichter und schneller auf eine Gefahrensituation reagieren als ein übermüdeter Fahrer.

Von Vorteil ist es weiterhin, wenn infolge des Auswertens der fahrzeuginternen und der fahrzeugexternen Daten die Gefahrensituation klassifiziert und dem Nutzer des Kraftfahrzeugs eine Intensität der Gefahrensituation kommuniziert wird. Beispielsweise kann eine Gefahrensituation als hochgefährlich, gefährlich oder als mit vergleichsweise geringer Gefahr verbunden eingestuft oder klassifiziert werden. Eine Abstufung der Intensität der Gefahrensituation kommt dann beim entsprechenden Generieren der Warnung zum Ausdruck. So kann die Intensität eines die Gefahrensituation angebenden Warnsignals je nach Intensität der Gefahrensituation variiert werden.

In einer weiteren vorteilhaften Ausgestaltung der Erfindung wird die Warnung dem Nutzer des Kraftfahrzeugs optisch und/oder akustisch erfassbar kommuniziert. Beispielsweise kann auf einer Anzeige ein Balken oder dergleichen dargestellt werden, welcher das Vorliegen der Gefahrensituation angibt. Insbesondere bei einer Balkendarstellung lässt sich nämlich besonders einfach eine Abstufung je nach Intensität der Gefahrensituation vornehmen. Es kann jedoch auch eine Anzahl unterschiedlicher diskreter Elemente über die Intensität der Gefahrensituation Auskunft geben, etwa wenn bei großer Gefahr mehr Leuchten aufleuchten als bei geringer Gefahr. Ebenso können Warntöne zum Einsatz kommen, wobei die Lautstärke und/oder die Frequenz, mit welcher die Töne ausgegeben werden, einen Hinweis auf die Intensität der Gefahrensituation geben kann.

Die Warnung kann dem Nutzer des Kraftfahrzeugs auf einer Instrumententafel des Kraftfahrzeugs angezeigt werden. Zusätzlich oder alternativ kann die Warnung in einer Blickfeldanzeige kommuniziert werden, welche auch als Head-up-Display bezeichnet wird. Es kann auch zusätzlich zu einer Anzeige auf der Instrumententafel oder im Head-up-Display ein Warnton den Nutzer auf das Vorliegen der Gefahrensituation hinweisen. Durch die Übermittlung auf optischem und/oder akustischem Weg kann besonders gut sichergestellt werden, dass der Nutzer rechtzeitig auf das Vorliegen der Gefahrensituation hingewiesen wird.

Es wird anhand der fahrzeuginternen Daten ein Fahrverhalten des Nutzers des Kraftfahrzeugs ermittelt. Die Warnung wird hierbei in Abhängigkeit vom Fahrverhalten dem Nutzer kommuniziert. Beispielsweise kann die Analyse der fahrzeuginternen Daten auf ein sportliches Fahrverhalten des Nutzers hinweisen. Liegt ein solches sportliches Fahrverhalten vor, so wird eine Warnschwelle erhöht, also eine Schwelle, ab welcher dem Nutzer des Kraftfahrzeugs die Warnung kommuniziert wird, welche die Gefahrensituation betrifft. Dann wird der sportliche Fahrer nicht unnötig in Situationen gewarnt, welche bei einem weniger sportlichen Fahrer das Ausgeben der Warnung zur Folge haben. Dadurch wird vermieden, dass sich der Fahrer von den Warnungen belästigt fühlt. Für einen sportlichen Fahrer kann so zumindest in einigen Fahrsituationen das Ausgeben der Warnung auch vollständig unterbunden werden.

Der Fahrer kann insbesondere durch das Aktivieren eines Sportmodus des Kraftfahrzeugs und/oder durch eine sonstige Eingabe zu erkennen geben, dass das Ausgeben der Warnung unterbunden werden soll. Dies kann auch vom Kraftfahrzeug gelernt werden, indem der Fahrer eine ausgegebene Warnung deaktiviert und so zu erkennen gibt, dass das Ausgeben der Warnung nicht von ihm gewünscht war. Dann wird in einer nachfolgenden, vergleichbaren Situation keine Warnmeldung ausgegeben.

Hierbei wird die geografische Position des Kraftfahrzeugs berücksichtigt. Befindet sich dieses nämlich beispielsweise auf einer Rennstrecke oder Teststrecke, so ist davon auszugehen, dass hohe Kurvengeschwindigkeiten, Längs- und Querbeschleunigungen auftreten. In einem solchen Fall ist dann das Ausgeben von Warnmeldungen, welche eine Gefahrensituation betreffen, nicht sinnvoll.

Es kann auch anhand der fahrzeuginternen Daten das individuelle Fahrverhalten des Nutzers ermittelt werden, um diese beim Ermitteln des Vorliegens der Gefahrensituation entsprechend zu berücksichtigen. Wenn sich beispielsweise herausstellt, dass der Nutzer vergleichsweise häufig mit großer Geschwindigkeit in Kurven einfährt, dann kann er präventiv vor besonders gefährlichen Kurven gewarnt werden. Hier führt also die Auswertung des Fahrverhaltens des Nutzers dazu, dass dieselben der Empfangseinrichtung des Kraftfahrzeugs übermittelten fahrzeugexternen Daten, nämlich das Vorliegen einer bestimmten Kurve als eine für den spezifischen Fahrer relevante Gefahrensituation eingestuft wird. Demgegenüber kann bei einem Fahrer mit defensivem Fahrverhalten das Vorliegen derselben Kurve nicht zum Ausgeben der Warnung führen oder zum Ausgeben einer Warnung, welche auf eine Gefahrensituation mit vergleichsweise geringer Intensität hinweist.

Schließlich hat es sich als vorteilhaft gezeigt, wenn die Warnung in Abhängigkeit von einer Reaktion des Nutzers des Kraftfahrzeugs verändert wird. So kann die Warnung verschwinden, wenn der Nutzer sein Fahrverhalten ändert, so dass die fahrzeuginternen Daten verknüpft mit den fahrzeugexternen Daten nicht mehr oder in geringerem Ausmaß auf das Vorliegen der Gefahrensituation schließen lassen.

Das erfindungsgemäße Kraftfahrzeug umfasst eine Empfangseinrichtung zum Empfangen von fahrzeugexternen Daten, welche auf das Vorliegen einer Gefahrensituation schließen lassen. Zum Ausgeben einer die Gefahrensituation betreffenden Warnung an einen Nutzer des Kraftfahrzeugs ist eine Warneinrichtung vorgesehen. Das Kraftfahrzeug umfasst des Weiteren eine Auswerteeinrichtung, mittels welcher zusätzlich zu den fahrzeugexternen Daten fahrzeuginterne Daten auswertbar sind, welche auf das Vorliegen einer Gefahrensituation schließen lassen. Die Auswerteeinrichtung ist hierbei zum Ansteuern der Warneinrichtung in Abhängigkeit von der Auswertung der fahrzeugexternen und der fahrzeuginternen Daten ausgelegt. Dadurch, dass die Auswerteeinrichtung sowohl die fahrzeugexternen als auch die fahrzeuginternen Daten berücksichtigt, kann besonders gut eine individuelle Warnung des Nutzers in Abhängigkeit von der für diesen tatsächlich vorliegenden Gefahrensituation erfolgen.

Die für das erfindungsgemäße Verfahren beschriebenen Vorteile und bevorzugten Ausführungsformen gelten auch für das erfindungsgemäße Kraftfahrzeug und umgekehrt.

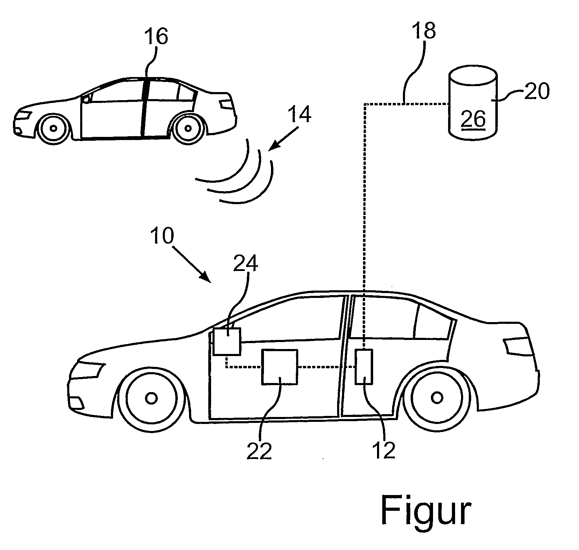

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt schematisch ein Kraftfahrzeug, welches fahrzeuginterne und fahrzeugexterne Daten verarbeitet, um in Echtzeit eine entsprechende Warnmeldung an einen Fahrer des Fahrzeugs auszugeben.

Ein in der Figur gezeigtes Kraftfahrzeug 10 umfasst eine Empfangseinrichtung 12 zum Empfangen von fahrzeugexternen Daten. Diese fahrzeugexternen Daten umfassen vorliegend Daten 14, welche weitere Kraftfahrzeuge 16 betreffen, wobei in der Figur der Übersichtlichkeit halber lediglich ein solches weiteres Kraftfahrzeug 16 dargestellt ist. Des Weiteren empfängt die Empfangseinrichtung 12 an fahrzeugexternen Daten solche, welche über eine Internetverbindung 18 mit dem Internet abgerufen werden können, wobei in der Figur vereinfacht eine Datenbank 20 gezeigt ist, welche solche Internetdaten enthält. Die Internetdaten oder Onlinedaten 26, welche über die Internetverbindung 18 dem Kraftfahrzeug 10 übermittelt werden können, sind vorliegend in der Datenbank 20 schematisch gezeigt.

Zusätzlich zu diesen fahrzeugexternen Daten, welche einerseits von weiteren Kraftfahrzeugen 16 und andererseits über die Internetverbindung 18 beschafft werden, werden von einem Steuergerät 22 oder dergleichen Auswerteeinrichtung fahrzeuginterne Daten 25 ausgewertet, also Daten, welche das Kraftfahrzeug 10 oder einen Fahrer des Kraftfahrzeugs 10 betreffen. Die Verknüpfung der fahrzeugexternen Daten 14, 26 und der fahrzeuginternen Daten 25 ermöglicht es, in Echtzeit die aktuelle Gefahrensituation automatisch zu berechnen und dem Fahrer des Kraftfahrzeugs 10 eine entsprechende Warnmeldung zu kommunizieren.

Hierfür steuert das Steuergerät 22, welches mit der Empfangseinrichtung 12 gekoppelt ist, eine Anzeige 24 an, bei welcher es sich insbesondere um ein Head-up-Display handeln kann. Zusätzlich wird bevorzugt ein Warnton ausgegeben.

Die individuelle Warnung vor einer Gefahrensituation erfolgt also in Echtzeit durch die Verknüpfung von den individuellen Fahrer- und Fahrzeugdaten, also den fahrzeuginternen Daten 25 mit den Daten 14 der externen Kraftfahrzeuge 16 und den Onlinedaten 26. Bei den fahrzeugexternen Daten kann es sich hierbei insbesondere um aggregierte Daten handeln, also um Daten, welche von einem Schwarm der weiteren Kraftfahrzeuge 16 bereitgestellt oder aufbereitet wurden. Der Fahrer wird vor gefährlichen Situationen gewarnt, indem die aktuelle Gefahrensituation in Echtzeit individuell errechnet wird. Hierbei werden die Daten verschiedener Ebenen bzw. verschiedenen Ursprungs miteinander verknüpft.

Es können auch je nach Art der fahrzeugexternen Daten unterschiedliche Empfangseinrichtungen in dem Kraftfahrzeug 10 vorgesehen sein, welche die empfangenen fahrzeugexternen Daten dann zur Auswertung an das Steuergerät 22 übermitteln.

An fahrzeuginternen Daten 25 können beispielsweise Daten über die Geschwindigkeit, Reibwerte, eine Fahreraufmerksamkeit, ein Lenkverhalten, Längsbeschleunigungen und Querbeschleunigungen des Kraftfahrzeugs 10 gesammelt werden.

Die von den weiteren Kraftfahrzeugen 16 übermittelten Daten 14 können Reibwerte, Geschwindigkeiten, Signale von Regensensoren, das Aktivieren von Nebelschlussleuchten oder Nebelscheinwerfern, die Stellung von Sonnenblenden der weiteren Kraftfahrzeuge 16 oder dergleichen umfassen.

Die über die Internetverbindung 18 erhältlichen Onlinedaten 26 können Unfallstatistiken, Wetterdaten, Verkehrsdaten und das Vorhandensein von Baustellen umfassen.

Durch die Verknüpfung dieser fahrzeugexternen und der fahrzeuginternen Daten kann so für den einzelnen Fahrer bzw. das einzelne Kraftfahrzeug 10 die momentane Gefahrensituation errechnet werden. Beispielsweise können die weiteren Kraftfahrzeuge 16 geringe Reibwerte melden, wie sie bei Nässe und Glätte vorliegen. Zusätzlich oder alternativ können die von den weiteren Kraftfahrzeugen 16 übermittelten Daten 14 besagen, dass bestimmte Sicherheitssysteme wie ein elektronisches Stabilitätsprogramm oder ein Antiblockiersystem in das Fahrverhalten der weiteren Kraftfahrzeuge 16 auf einer bestimmten Strecke eingegriffen haben.

Des Weiteren kann die über die Internetverbindung 18 zugängliche Datenbank 20 Onlinedaten 26 in Form einer Onlinestatistik umfassen, welche auf eine generell erhöhte Unfallhäufigkeit auf eben der gerade von dem Kraftfahrzeug 10 befahrenden Strecke hinweist. Daraufhin wird dem Fahrer des Kraftfahrzeugs 10 akustisch und über das Head-up-Display (oder auf der Instrumententafel) eine erhöhte Gefahr gemeldet. Zusätzlich kann der Grund der erhöhten Gefahr kommuniziert werden.

Hierbei werden jedoch stets auch die fahrzeuginternen Daten 25 berücksichtigt, so dass der Fahrer des Kraftfahrzeugs 10 auf eine für ihn besonders relevante Gefahrensituation adäquat hingewiesen wird.

Das Auswerten der fahrzeugexternen Daten 14, welche die weiteren Kraftfahrzeuge 16 betreffen, und der fahrzeuginternen Daten 25 kann auch noch für weitere Zwecke genutzt werden. Ergibt sich anhand der individuellen Warnung von Gefahrensituationen, dass ein bestimmter Fahrer besonders häufig in Gefahrensituationen gerät, so kann diesem Fahrer geraten werden, dass es für ihn günstig wäre, in Zukunft ein besonders sicheres Fahrzeug zu nutzen. So kann ihm beispielsweise im Kraftfahrzeug 10 angezeigt oder auf anderem Wege, etwa durch einen Händler, nahegebracht werden, von einem Kraftfahrzeug mit Frontantrieb auf ein Kraftfahrzeug mit Allradantrieb umzusteigen.

Es können insbesondere Daten 25 über den einzelnen Fahrer des Kraftfahrzeugs 10 gesammelt werden, und auf der Grundlage dieser Daten 25 kann ein individuelles Gefahrenprofil erstellt werden. Dieses Gefahrenprofil findet dann wieder in der Berechnung der Echtzeit- Gefahrensituation Anwendung. Wenn beispielsweise der einzelne Fahrer des Kraftfahrzeugs 10 häufig besonders schnell in Kurven einfährt, so kann er schon präventiv vor besonders gefährlichen Kurven gewarnt werden.

Vorliegend erfolgt jedoch kein aktiver Eingriff in die Fahrt des Kraftfahrzeugs 10, sondern es wird lediglich der Fahrer des Kraftfahrzeugs 10 in Echtzeit auf das Vorliegen einer für ihn besonders relevanten Gefahrensituation hingewiesen. So lässt sich eine Reduktion von Unfällen erreichen.

Auf die aktuelle Gefahrensituation kann insbesondere durch eine visuelle Darstellung auf der Instrumententafel oder im Head-up-Display hingewiesen werden, wobei die Intensität der Gefahrensituation sich in einer Abstufung der Darstellung widerspiegeln kann. Beispielsweise kann das Einblenden eines Balkens in das Head-up-Display auf das Vorliegen der Gefahrensituation hinweisen, wobei die Länge des Balkens über die Intensität der Gefahrensituation Auskunft gibt. Ändert sich in einem solchen Fall das Fahrverhalten des Fahrers des Kraftfahrzeugs 10, etwa indem er die Geschwindigkeit verringert, so verringert sich auch die Länge des die Gefahr angebenden Balkens. Die Anzeige ändert sich also in Echtzeit in Abhängigkeit von der aktuellen Fahrerreaktion.

Bevorzugt werden des Weiteren die Warnungen intelligent gefiltert, indem beispielsweise bei einem Fahrer des Kraftfahrzeugs 10, bei welchem häufig hohe Längs- und Querbeschleunigungen auftreten, dessen sportliche Fahrweise beim Ausgeben der Warnmeldung berücksichtigt wird, welche die Gefahrensituation angibt. So kann verhindert werden, dass ein sportlicher Fahrer des Kraftfahrzeugs 10 von ständigen Gefahrenwarnungen belästigt wird.

## Patentansprüche

1. Verfahren zum Betreiben eines Kraftfahrzeugs (10), bei welchem einer Empfangseinrichtung (12) des Kraftfahrzeugs (10) fahrzeugexterne Daten (14, 26) übermittelt werden, welche auf das Vorliegen einer Gefahrensituation schließen lassen, wobei zusätzlich zu den fahrzeugexternen Daten (14, 26) fahrzeuginterne Daten (25) ausgewertet werden, welche auf das Vorliegen der Gefahrensituation schließen lassen, und bei welchem einem Nutzer des Kraftfahrzeugs (10) eine die Gefahrensituation betreffende Warnung kommuniziert wird,
wobei die Warnung dem Nutzer des Kraftfahrzeugs (10) in Abhängigkeit von der Auswertung der fahrzeugexternen Daten (14, 26) und der fahrzeuginternen Daten (25) kommuniziert wird,
wobei anhand der fahrzeuginternen Daten (25) ein Fahrverhalten des Nutzers des Kraftfahrzeugs (10) ermittelt und in Abhängigkeit vom Fahrverhalten die Warnung kommuniziert wird, wobei eine Warnschwelle erhöht wird, ab welcher dem Nutzer des Kraftfahrzeugs (10) die Warnung kommuniziert wird, wenn ein sportliches Fahrverhalten vorliegt, und wobei die geografische Position des Kraftfahrzeugs (10) berücksichtigt wird,
**dadurch gekennzeichnet, dass**
ein Ausgeben der Warnung unterbunden wird, wenn sich das Kraftfahrzeug (10) auf einer Rennstrecke oder Teststrecke befindet.

2. Verfahren nach Anspruch 1,
**dadurch gekennzeichnet, dass**
als fahrzeugexterne Daten weitere Kraftfahrzeuge (16) betreffende Daten (14) wie:
- eine Fahrgeschwindigkeit und/oder
- ein Reibwert eines Fahrbahnbelags und/oder
- ein Eingreifen eines Sicherheitssystems und/oder
- ein Betätigen eines Scheibenwischers und/oder ein Signal eines Regensensors und/oder
- ein Aktivieren eines Leuchtmittels und/oder
- eine Stellung einer Sonnenblende und/oder ein Signal einer Einrichtung zum Erfassen des Sonnenstands und/oder
- eine Anwesenheit eines Rettungsfahrzeugs und/oder Einsatzfahrzeugs
ausgewertet und beim Ermitteln des Vorliegens der Gefahrensituation berücksichtigt werden.

3. Verfahren nach Anspruch 1 oder 2,
**dadurch gekennzeichnet, dass**
als fahrzeugexterne Daten Internetdaten (26) und/oder über ein Radiodatensystem übermittelbare Informationen wie:
- eine Unfallhäufigkeit angebende Daten und/oder
- Wetterdaten und/oder
- den Verkehrsfluss angebende Daten und/oder
- Unfallmeldungen und/oder
- ein Vorhandensein von Baustellen
ausgewertet und beim Ermitteln des Vorliegens der Gefahrensituation berücksichtigt werden.

4. Verfahren nach einem der Ansprüche 1 bis 3,
**dadurch gekennzeichnet, dass**
fahrzeuginterne Daten (25) wie:
- eine Fahrgeschwindigkeit des Kraftfahrzeugs (10) und/oder
- ein Abstand des Kraftfahrzeugs (10) zu weiteren Verkehrsteilnehmern und/oder
- ein Lenkverhalten eines Fahrers des Kraftfahrzeugs (10) und/oder
- eine Kurvengeschwindigkeit des Kraftfahrzeugs (10) und/oder
- eine Längsbeschleunigung und/oder eine Querbeschleunigung des Kraftfahrzeugs (10) und/oder
- ein Reibwert eines Fahrbahnbelags und/oder
- ein Zustand von Reifen und/oder eine Bremsanlage des Kraftfahrzeugs (10)
ausgewertet und beim Ermitteln des Vorliegens der Gefahrensituation berücksichtigt werden.

5. Verfahren nach einem der Ansprüche 1 bis 4,
**dadurch gekennzeichnet, dass**
einen Fahrer des Kraftfahrzeugs (10) betreffende Daten (25) wie:
- eine Reaktionszeit des Fahrers und/oder
- ein Müdigkeitszustand des Fahrers und/oder
- ein Aufmerksamkeitsniveau des Fahrers ausgewertet und beim Ermitteln des Vorliegens der Gefahrensituation berücksichtigt werden.

6. Verfahren nach einem der Ansprüche 1 bis 5,
**dadurch gekennzeichnet, dass**
infolge des Auswertens der fahrzeuginternen und der fahrzeugexternen Daten (14, 26, 25) die Gefahrensituation klassifiziert und dem Nutzer des Kraftfahrzeugs (10) eine Intensität der Gefahrensituation kommuniziert wird.

7. Verfahren nach einem der Ansprüche 1 bis 6,
**dadurch gekennzeichnet, dass**
die Warnung dem Nutzer des Kraftfahrzeugs (10) optisch und/oder akustisch erfassbar, insbesondere auf einer Instrumententafel des Kraftfahrzeugs (10) und/oder in einer Blickfeldanzeige, kommuniziert wird.

8. Verfahren nach einem der Ansprüche 1 bis 7,
**dadurch gekennzeichnet, dass**
die Warnung in Abhängigkeit von einer Reaktion des Nutzers des Kraftfahrzeugs (10) verändert wird.

9. Kraftfahrzeug mit einer Empfangseinrichtung (12) zum Empfangen von fahrzeugexternen Daten (14, 26), welche auf das Vorliegen einer Gefahrensituation schließen lassen, wobei das Kraftfahrzeug (10) eine Auswerteeinrichtung (22) umfasst, mittels welcher zusätzlich zu den fahrzeugexternen Daten (14, 26) fahrzeuginterne Daten (25) auswertbar sind, welche auf das Vorliegen der Gefahrensituation schließen lassen, und mit einer Warneinrichtung (24) zum Ausgeben einer die Gefahrensituation betreffenden Warnung an einen Nutzer des Kraftfahrzeugs (10),
wobei die Auswerteeinrichtung (22) zum Ansteuern der Warneinrichtung (24) in Abhängigkeit von der Auswertung der fahrzeugexternen Daten (14, 26) und der fahrzeuginternen Daten (25) ausgelegt ist, wobei die Auswerteeinrichtung (22) dazu ausgelegt ist, anhand der fahrzeuginternen Daten (25) ein Fahrverhalten des Nutzers des Kraftfahrzeugs (10) zu ermitteln und in Abhängigkeit vom Fahrverhalten die Warneinrichtung (24) zum Kommunizieren der Warnung anzusteuern und eine Warnschwelle zu erhöhen, ab welcher dem Nutzer des Kraftfahrzeugs (10) die Warnung kommuniziert wird, wenn ein sportliches Fahrverhalten vorliegt, und wobei die Auswerteeinrichtung (22) dazu ausgelegt ist, die geografische Position des Kraftfahrzeugs (10) zu berücksichtigen,
**dadurch gekennzeichnet, dass**
die Auswerteeinrichtung (22) derart ausgelegt ist, dass sie ein Ausgeben der Warnung unterbindet, wenn sich das Kraftfahrzeug (10) auf einer Rennstrecke oder Teststrecke befindet.

## Claims

1. Method of operating a motor vehicle (10) in which transmitted to a receiver device (12) of the motor vehicle (10) are data from outside the motor vehicle (14,26) which are indicative of the presence of a hazardous situation, whereby in addition to the data from outside the motor vehicle (14, 26), internal motor vehicle data (25) indicative of a hazardous situation can be evaluated and whereby a warning relating to the hazardous situation is communicated to the user of the motor vehicle, wherein the warning to the user of the motor vehicle (10) is communicated as a function of the evaluation of the data from outside the vehicle (14, 26) and the internal vehicle data (25),
wherein by way of the data from outside vehicle (25) a driving behaviour of the user of the motor vehicle (10) is determined and the warning is communicated as a function of the driving behaviour, wherein a warning threshold as of which the warning is communicated to the user of the motor vehicle (10) is increased in the event of sporting driving behaviour and wherein the geographical position of the motor vehicle (10) is taken in consideration,
**characterised in that**
the issuing of the warning is suppressed if the motor vehicle (10) is on a racing track or test track.

2. Method according to claim 1
**characterised in that**
as data from outside the motor vehicle, data (14) relating to other motor vehicles (16) such as
- a driving speed and/or
- a friction value of a road surface and/or
- an activation of a safety system and/or
- an operation of a windscreen wiper or a signal of a rain sensor and/or
- an activation of a light and/or
- a setting of a sun blind and/or a signal of a device for recording the position of the sun and/or
- a presence of a rescue vehicle and/or a replacement vehicle are evaluated and taken into account in the determination of the hazardous situation.

3. Method according to claim 1 or 2
**characterised in that**
as data from outside the vehicle, internet data (26) and/or information transmittable via radio-communication systems such as:
- data setting out accident frequency and/or
- weather data and/or
- data showing traffic flow and/or
- accident reports and/or
- the presence of roadworks
are evaluated and taken into consideration in the determination of the hazardous situation.

4. Method according to any one of claims 1 to 3
**characterised in that**
internal vehicle data (25) such as
- a driving speed of the motor vehicle (10) and/or
- a distance of the motor vehicle (10) from other traffic and/or
- a steering behaviour by the driver of the motor vehicle (10) and/or
- a speed of the motor vehicle (10) in curves and/or
- a longitudinal acceleration and/or a lateral acceleration of the motor vehicle (10) and/or
- a friction value of a road surface and/or
- a condition of the tyres and/or a braking system of the motor vehicle (10)
are evaluated and taken into consideration in the determination of the hazardous situation.

5. Method according to any one of claims 1 to 4
**characterised in that**
data (25) relating to a driver of the motor vehicle (10) such as
- a reaction time of the driver and/or
- a state of tiredness of the driver and/or
- a level of attentiveness of the drive
are evaluated and taken into consideration in the determination of the hazardous situation.

6. Method according to any one of claims 1 to 5
**characterised in that**
as a result of the evaluation of the internal vehicle data and the data from outside the vehicle (14, 26, 25) the hazardous situation is classified and an intensity of the hazardous situation is communicated to the user of the vehicle (10).

7. Method according to any one of claims 1 to 6
**characterised in that**
the warning is communicated to the user of the vehicle (10) in an optically and/or acoustically perceivable manner, more particularly on an instrument panel of the motor vehicle (10) and/or in a field of vision indication.

8. Method according to any one of claims 1 to 7 **characterised in that**
the warning is changed in dependence on the reaction of the user of the motor vehicle (10).

9. Motor vehicle with a receiver device (12) for receiving data from outside the motor vehicle (14, 26) which are indicative of a hazardous situation, wherein the motor vehicle (10) has an evaluation device (22) by means of which in addition to the data from outside the motor vehicle (14, 26) internal vehicle data (25) can be evaluated which are indicative of the presence of the hazardous situation, and with a warning device (24) for issuing a warning relating to the hazardous situation to a user of the motor vehicle (10),
wherein the evaluation device (22) is designed to control the warning device (24) as a function of the evaluation of the data from outside the vehicle (14, 26) and the internal vehicle data (25), wherein the evaluation device (22) is designed, on the basis of internal vehicle data (25), to determine a driving behaviour of the user of the vehicle (10) and as a function of the driving behaviour to control the warning device (24) for communicating the warning and to increase a warning threshold as of which the warning is communicated to the user of the vehicle (10) in the case of sporting driving behaviour and wherein the evaluation device (22) is designed to take into account the geographical position of the motor vehicle (10),
**characterised in that**
the evaluation device (22) is designed to suppress the issuing of a warning if the motor vehicle (10) is on a racing track or test track.

## Revendications

1. Procédé de fonctionnement d'un véhicule automobile (10), selon lequel on transmet à un dispositif de réception (12) du véhicule automobile (10) des données (14, 26) externes au véhicule qui indiquent la présence d'une situation dangereuse, des données (25) internes au véhicule qui indiquent la présence de la situation dangereuse étant évaluées en plus des données (14, 26) externes au véhicule, et selon lequel on communique à un utilisateur du véhicule automobile (10) un avertissement concernant la situation dangereuse,
l'avertissement étant communiqué à l'utilisateur du véhicule automobile (10) en fonction de l'évaluation des données (14, 26) externes au véhicule et des données (25) internes au véhicule,
un comportement de conduite de l'utilisateur du véhicule automobile (10) étant déterminé à l'aide des données (25) internes au véhicule et l'avertissement étant communiqué en fonction du comportement de conduite, un seuil d'avertissement à partir duquel l'avertissement est communiqué à l'utilisateur du véhicule automobile (10) étant relevé lorsqu'on est en présence d'un comportement de conduite sportif,
et la position géographique du véhicule automobile (10) étant prise en compte,
**caractérisé en ce que** l'avertissement n'est pas donné lorsque le véhicule automobile (10) se trouve sur un circuit de course ou un circuit d'essai.

2. Procédé selon la revendication 1, **caractérisé en ce que**, comme données externes au véhicule, on évalue des données (14) concernant d'autres véhicules automobiles (16) telles que :
- une vitesse et/ou
- une valeur de frottement d'un revêtement de chaussée et/ou
- une intervention d'un système de sécurité et/ou
- un actionnement d'un essuie-glace et/ou un signal d'un capteur de pluie et/ou
- une activation d'un dispositif d'éclairage et/ou
- une position d'un pare-soleil et/ou un signal d'un dispositif détectant la position du soleil et/ou
- une présence d'un véhicule de secours et/ou d'un véhicule d'intervention
et on en tient compte lors de la détermination de la présence de la situation dangereuse.

3. Procédé selon la revendication 1 ou 2, **caractérisé en ce que**, comme données externes au véhicule, on évalue des données internet (26) et/ou des informations pouvant être transmises par l'intermédiaire d'un système de données radio telles que :
- des données indiquant une fréquence d'accidents et/ou
- des données météorologiques et/ou
- des données indiquant le trafic et/ou
- des signalisations d'accidents et/ou
- la présence de travaux
et on en tient compte lors de la détermination de la présence de la situation dangereuse.

4. Procédé selon l'une des revendications 1 à 3, **caractérisé en ce que** l'on évalue des données (25) internes au véhicule telles que :
- une vitesse du véhicule automobile (10) et/ou
- une distance du véhicule automobile (10) à d'autres usagers de la route et/ou
- une action sur la direction d'un conducteur du véhicule automobile (10) et/ou
- une vitesse en virage du véhicule automobile (10) et/ou
- une accélération longitudinale et/ou une accélération transversale du véhicule automobile (10) et/ou
- une valeur de frottement d'un revêtement de chaussée et/ou
- un état de pneus et/ou un système de freinage du véhicule automobile (10)
et on en tient compte lors de la détermination de la présence de la situation dangereuse.

5. Procédé selon l'une des revendications 1 à 4, **caractérisé en ce que** l'on évalue des données (25) concernant un conducteur du véhicule automobile (10) telles que :
- un temps de réaction du conducteur et/ou
- un état de fatigue du conducteur et/ou
- un niveau d'attention du conducteur
et on en tient compte lors de la détermination de la présence de la situation dangereuse.

6. Procédé selon l'une des revendications 1 à 5, **caractérisé en ce que**, suite à l'évaluation des données (14, 26, 25) internes et externes au véhicule, on classifie la situation dangereuse et on communique à l'utilisateur du véhicule automobile (10) une intensité de la situation dangereuse.

7. Procédé selon l'une des revendications 1 à 6, **caractérisé en ce que** l'on communique l'avertissement à l'utilisateur du véhicule automobile (10) de façon qu'il soit perçu de manière optique et/ou acoustique, notamment sur un tableau de bord du véhicule automobile (10) et/ou avec un affichage dans le champ visuel.

8. Procédé selon l'une des revendications 1 à 7, **caractérisé en ce que** l'on modifie l'avertissement en fonction d'une réaction de l'utilisateur du véhicule automobile (10).

9. Véhicule automobile avec un dispositif de réception (12) pour recevoir des données (14, 26) externes au véhicule qui indiquent la présence d'une situation dangereuse, le véhicule automobile (10) comprenant un dispositif d'évaluation (22) au moyen duquel des données (25) internes au véhicule qui indiquent la présence de la situation dangereuse sont évaluées en plus des données (14, 26) externes au véhicule et un dispositif d'avertissement (24) pour donner à un utilisateur du véhicule automobile (10) un avertissement indiquant la situation dangereuse,
le dispositif d'évaluation (22) étant conçu pour commander le dispositif d'avertissement (24) en fonction de l'évaluation des données (14, 26) externes au véhicule et des données (25) internes au véhicule,
le dispositif d'évaluation (22) étant conçu pour déterminer à l'aide des données (25) internes au véhicule un comportement de conduite de l'utilisateur du véhicule automobile (10), pour commander en fonction du comportement de conduite le dispositif d'avertissement (24) destiné à communiquer l'avertissement et pour relever un seuil d'avertissement à partir duquel l'avertissement est communiqué à l'utilisateur du véhicule automobile (10) lorsqu'on est en présence d'un comportement de conduite sportif et
le dispositif d'évaluation (22) étant conçu pour prendre en compte la position géographique du véhicule automobile (10),
**caractérisé en ce que** le dispositif d'évaluation (22) est conçu pour empêcher la communication de l'avertissement lorsque le véhicule automobile (10) se trouve sur un circuit de course ou un circuit d'essai.
